# EUROPEAN PATENT APPLICATION

(11) **EP 1 353 499 A1**
(43) Date of publication of application: **15.10.2003**
(21) Application number: 03008445.3
(22) Date of filing: 11.04.2003
(51) Int. Cl.: H04N 3/15

(54) **Electronic selector device for electro-optical sensors**

(30) Priority: 12.04.2002 IT UD20020084
(71) Applicant: Neuricam S.P.A., 38100 Trento (IT)
(72) Inventor: Tecchioli, Giampietro, 38100 Trento (IT); Sartori, Alvise, 38050 Povo (TN) (IT); Covi, Daniele, 39100 Bolzano (IT)
(74) Representative: Petraz, Gilberto

(57) **Abstract**

Electronic selector device (100) for an electro-optical sensor provided with a plurality of light-sensitive elements, or pixels, (10) arranged in rows and columns so as to form a matrix (27). The device comprises decoders (60) implemented as four shift registers (55, 56, 57, 58) comprising memory cells (59). A first (55) and a second (56) of the shift registers identify any one whatsoever of the pixels (10) of the matrix (27). The function of the third (57) shift register is to vary the integration time of the light signal, and the function of the fourth (58) shift register is to regulate the size of the image to be acquired. Each of the cells (59) is selectively enabled in a dynamically programmable way so as to modify the structure and the operation of the shift registers (55, 56, 57) according to input signals serially introduced into the fourth register (58) in order to select and read only a sub-frame of the total of the pixels (10) in the matrix (27).

## Description

### FIELD OF THE INVENTION

The present invention concerns an electronic selector device, of the mixed type with shift registers and combinatory decoders, applied to silicon electro-optical sensors used in CMOS technology, consisting of a pilot circuit and high flexibility interface, able to manage an optical sensor formed by a plurality of light-sensitive elements suitable to detect an incident light and to convert it into a correlated electric signal.

The device according to the invention is used in various electronic devices for artificial vision, such as for example digital video cameras, intelligent optical sensors, or other similar applications, and is particularly suitable for applications which require high definition images to be detected.

### BACKGROUND OF THE INVENTION

The state of the art includes optical sensors consisting of a plurality of light-sensitive elements, or pixels, able to detect light signals and to transmit them, in the form of electric signals, to a calculator which processes them and obtains images from them which it transmits to display devices; the latter are then able to allow a user to see the images or information deriving therefrom.

Such optical sensors are usually made using CCD technology (Charge-Coupled Device). Although they supply a very satisfactory image quality in the presence of a well controlled illumination, they allow only very limited selection functions and have limited versatility because they cannot be integrated with complex pilot circuits in a single silicon support or microchip.

Some solutions of the problems of dynamically selecting the light-sensitive elements arranged in matrix in an optical sensor are disclosed in prior art documents EP 809.395 A, EP 748.111 A and US 5,410,348.

EP'395 discloses a device comprising two shift registers having a fixed structure within which, in a determined point, a digital "1" can be loaded to select the starting x-y location. An added circuit controls the shifting of the digital "1" so that the scans in x and y are repeated for subsequent added frames. However, this document does not disclose that the physical structure of the shift register can be modified according some input signals defining the starting point of a sub-frame, to select only a part of the pixels of the matrix in order to increase the frame rate.

EP'111 discloses a selecting device comprising two vertical scanning circuits for, respectively, reading in sequence pixel information and resetting the pixel after a pre-determined storage time, and a timing generator for supplying timing signals to the vertical circuits. Neither this document, however, discloses how to modify the physical structure of the shift registers according to input external signals.

US'348 discloses a selecting device for an image sensor comprising pixels arranged in a matrix. The selecting device comprises an electronic shutter scanning means formed of a shift register, which has the function of resetting a horizontal line spaced apart form a horizontal line currently read out by a shutter time in the vertical scanning direction. Again, the structure of the shift registers is fixed and not modifiable by external signals. Only the shutter time of resetting can be modified.

All the solutions disclosed in these documents have the drawback that, when a "signature" is inserted in a desired position of a shift register, all the register is shifted and all the related pixels are selected and read; only in a second step a part of information not wanted can be excluded.

This entails from one hand a greater complexity of the management of the data and, on the other hand, there is not any increase on the frame rate because the shift registers are not fractioned in an useful part, i.e. a sub-frame, which is selected (and whose related pixels are read) and in a not useful part which is excluded from the selection.

The present Applicant has devised and embodied this invention to overcome this shortcoming of the state of the art, and to obtain other advantages.

### SUMMARY OF THE INVENTION

The invention is set forth and characterized essentially in the main claim, while the dependent claims describe other innovative characteristics of the invention.

The purpose of the invention is to achieve an electronic selector device for electro-optical sensors integrated into a reduced size silicon substrate, or microchip, consisting of a micro-electronic circuit containing a pilot element functioning as an interface between a matrix of pixels, constituting the electro-optical sensor, and other, external electronic devices, both analogical and digital.

In accordance with this purpose the electronic device according to the invention comprises a pilot element of the matrix of pixels, substantially consisting of two decoders implemented as four shift registers, two of which serve to address any light-sensitive element (pixel) of the matrix, a third with the function of regulating the integration time of the light signal, thus allowing to adapt the sensitivity of the sensor to the light present, while the fourth has the function of regulating the size of the image to be acquired in order to select and read only a sub-frame of the total of the pixels in the matrix.

Generally, a decoder comprises a digital circuit which performs the function of activating an output line, among all those available, interpreting a digital signal carried on its input lines. Normally decoders for electro-optical sensors in CMOS technology are made with a combinatory logic which essentially implements the Boolean function AND. This type of use has the disadvantage that it can select only one line and moreover can accidentally cause, for short periods, several output lines to be switched on simultaneously.

The embodiment of the selector device according to the invention, which uses shift registers, guarantees that the outlets switch in a more carefully synchronized fashion, ensuring that in any given moment only the output lines actually addressed are activated, thus contributing to considerably improve the quality of the images produced by the sensor.

The structure with shift registers also allows to activate simultaneously a variable number of output lines, according to the function which is to be obtained: in this specific case, in the pixel address registers, only one line is selected at a time, while in the reset register, in order to obtain the function of light regulation, a sequence of signals is inserted which activate several lines simultaneously.

Furthermore, according to the present invention, the piloted sensor is formed by a two-dimensional matrix of light-sensitive elements, the so-called active pixels, made using CMOS technology and composed of a light sensitive reception means, for example an inversely polarized diode, associated with a regulation, amplification and reading circuit, for example made with three MOSFET transistors (Metal Oxide Silicon Field Effect Transistor).

The main characteristics of the invention are:
- the circuit plan can be composed when implemented on a microchip, starting from few base circuits;
- the interface is simple, so all the signals needed for it to function arrive from few connections with external circuits;
- it is possible to vary the light integration time, obtaining a good dynamic interval in the sensitivity of the sensor; and, above all,
- it is possible to read only a part of the image, or sub-frame, in order to obtain a reading speed of the frames which is greater, given the same frequency, than reading a single pixel, and in order to increase the frame rate.

One of the other advantages of the present invention is that it allows optimum integration on the microchips of light-sensitive elements and other electronic devices, both analogical and digital, since the selector device is formed by a mixed type circuit, that is to say, composed of shift registers associated with combinatory decoders of a classical type, which also performs the function of an interface with the outside.

Another advantage is that the invention gives the possibility to select the entire image in a flexible manner, or any sub-zone thereof, for example rectangular, in order to operate at acquisition frequencies for the frames of the images which are higher than those typical of CCD sensors, and to maintain at the same time the possibility of restoring the pixel (reset) so as to control the time of exposure to the light.

### BRIEF DESCRIPTION OF THE DRAWINGS

These and other characteristics of the present invention will be apparent from the following description of a preferential form of embodiment, given as a non-restrictive example with reference to the attached drawings wherein:
- fig. 1 shows the circuitry of a light-sensitive element according to the invention;
- fig. 2 shows the circuitry of an electro-optical sensor consisting of the light-sensitive elements in fig. 1;
- fig. 3 is a schematic view of the selector device according to the invention applied to the electro-optical sensor shown in fig. 2;
- fig. 4 shows an enlarged detail of fig. 3;
- fig. 5 shows an enlarged detail of fig. 3.

### DETAILED DESCRIPTION OF A PREFERENTIAL EMBODIMENT

With reference to the attached drawings, a selector device 100 according to the invention comprises a pilot element consisting substantially of two decoders 60 implemented by four shift registers 55, 56, 57 and 58. The device 100 is able to manage an optical sensor formed by at least a matrix 27 of light-sensitive elements, or pixels, 10 suitable to detect an incident light and to convert it into a correlated electric signal.

The selector device 100 in this case is of the mixed type with shift registers and decoders, which can be used in silicon electro-optical sensors in CMOS technology.

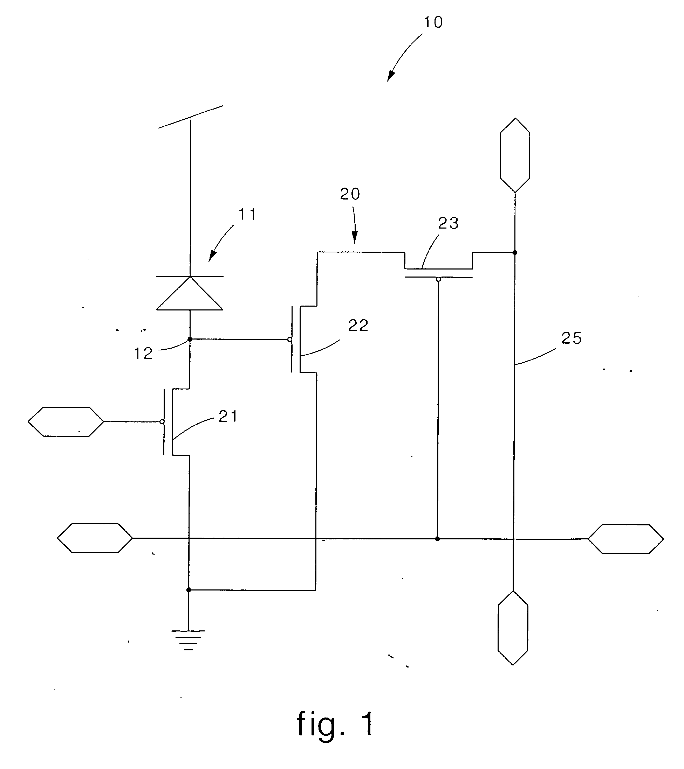

Each pixel 10 (fig. 1) is provided with an inversely polarized diode 11 associated with a regulation, amplification and reading circuit 20.

The pixel 10 in this case is of the type able to detect light, in the spectrum of visible and the nearby infra-red light, of variable intensity within an interval of 5 decades, between 5 mW/m² and 500 W/m², and is able to be used to form a matrix sensor which can be integrated into a microchip.

The diode 11 consists in practice of the source joint of a first P channel MOSFET transistor 21, that is, a diode made by the joint between the P type diffusion, highly doped, which acts as a charge source for the transistor 21, and the N type diffusion, medium doped, which forms the insulated substrate wherein the P channel transistors are made.

Electric charges are generated by the incident light radiation mainly inside this N type diffusion, which, being physically separate from the other parts of the chip, guarantees that the electric signal generated is scarcely influenced by the electronic noise which may be present, induced especially by the digital circuits.

A variable capacity is intrinsically associated with the diode 11 depending on the inverse polarization present at its ends. In this case, one side of the condenser, that is, the one represented by the N diffusion, is kept at constant tension (VDD), while the tension at the other end varies according to the incident light; this characteristic is at the basis of the functioning of the pixel 10.

The regulation, amplification and reading circuit 20 of the pixel 10 consists not only of the first transistor 21 but also of a second 22 and a third transistor 23. Each transistor 21, 22, 23 has its own specific function.

The transistor 21, called the reset transistor, controls the light sensitive node, indicated in fig. 1 by the reference number 12, keeping it at a fixed tension for as long as it is switched on, and allowing it to charge the capacity associated with the diode 11, when it is switched off.

When the switch-on time of the transistor 21 is increased, the integration time, during which the light-generated charge goes to charge the capacity, diminishes.

The transistor 22, in a conventional configuration called source follower, achieves the first stage of amplifying the signal under tension present on the light-sensitive node 12, while the selection transistor 23 enables the connection between the transistor 22 and the bitline 25, allowing the signal to be transmitted to other parts of the chip.

The pixel 10 is read by switching on the transistor 23 so as to transmit to the bitline 25 the amplified value of the tension present on the light-sensitive node 12 after a fixed integration time.

Considering the charge curve of the diode 11, comparable to a straight line, a signal which is directly proportional to the intensity of the incident light corresponds to a fixed integration time, since a greater light intensity is equivalent to a greater charge speed.

The sensitivity interval of the pixel 10 can be increased by calibrating the integration time according to the incident light, that is, by varying the switch-on time of the reset transistor 21. The pixel 10 in this way is able to detect a light-generated current of between about 50fA and 5nA, corresponding to a light incident power of between about 5mW/m² and 500W/m².

The device 10 also comprises means to eliminate the phenomenon known as sensor blooming, which occurs when there is a very strong illumination and which takes the light-sensitive node 12 of the pixel 10 to such a high tension that it polarizes the photodiode 11 directly, causing positive charges to be injected in the N type diffusion, which is common to all the pixels 10 of the matrix. Such charges, moving in the substrate, are attracted by the electric field of the adjacent pixels 10, that is, they are collected at the light-sensitive nodes 12 of the other pixels 10, and alter the signal thereof.

In this case blooming is eliminated by using, as a reset signal of the transistor 21, impulses of a maximum amplitude equal to about 2.8 V, so that also during the step wherein the transistor 21 is switched off, the light-sensitive node 12 can be charged only to a tension which, in any case, is never more than the feed tension VDD present at the other end of the capacity associated with the diode 11. In fact, by applying this reset signal, the transistor 21 is never completely switched off and the light-sensitive node 12 is not completely free to move to the tension corresponding to maximum illumination.

From the data available, the blooming effect in the pixel 10 should appear only for incident intensities of above 1KW/m².

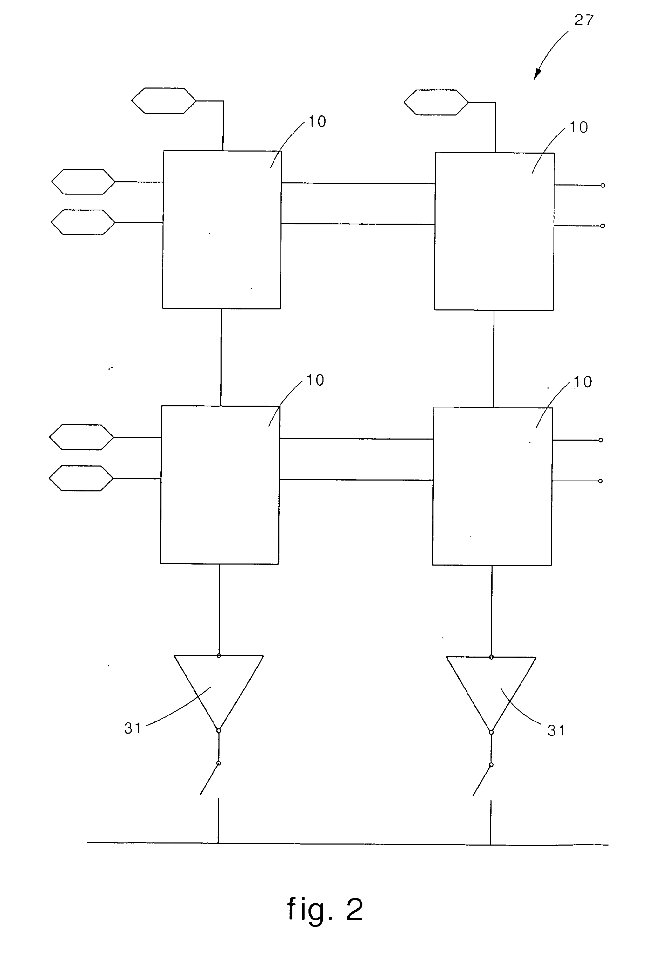

The modular arrangement, in rows and columns, of the pixels 10 as described heretofore forms a matrix 27 (fig. 2) controlled by a relative pilot circuit 30 of a digital type with functions of addressing and interfacing with external circuits. Its functions comprise managing the reset signals and reading each individual pixel 10.

The circuit 30 offers the advantage that it has a limited number of connections to external circuits. Moreover, the modular and reciprocal arrangement of the cells of the circuit 30 allows to re-design the latter in its physical planimetry, in order to adapt it to the matrixes 27 of arbitrary size without having to actuate substantive modifications to the architecture, but simply by composing variable length sequences of base cells.

Moreover, the operations of row selection and reset involve simultaneously all the pixels 10 in a row, so that it is possible to have all the pixels 10 of the row selected available at the same moment for reading.

This characteristic is exploited to obtain a high frequency of image acquisition, which is obtained thanks to the insertion of an amplifier 31 with a memorization stage (sample and hold) at the end of each column.

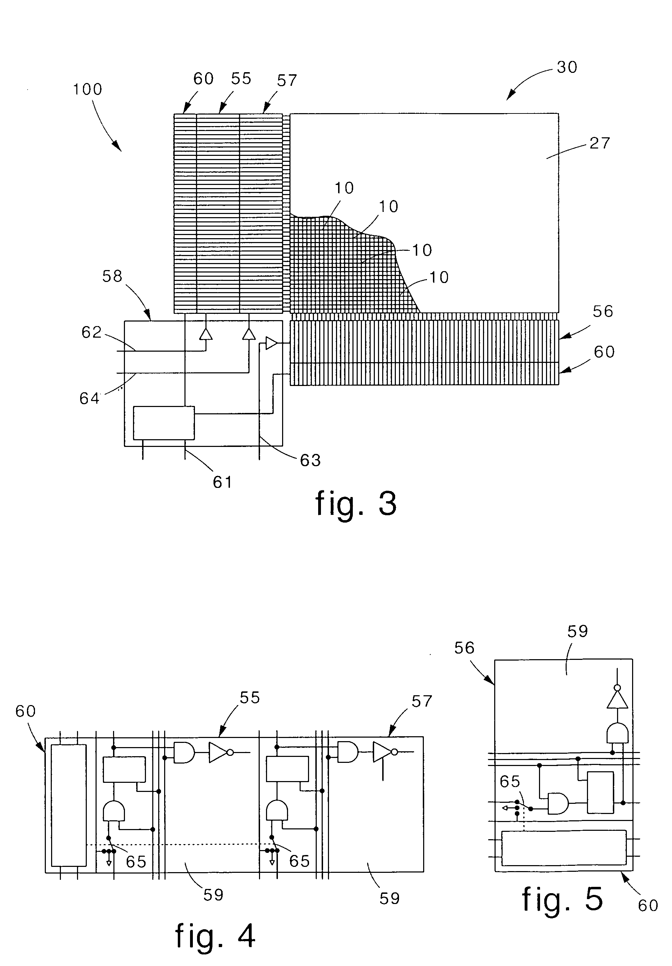

Fig. 3 shows the structure of one embodiment of the selector device 100 according to the invention, in this case composed of four shift registers 55, 56, 57, 58 and a double decoder 60.

The decoder 60 (figs. 4 and 5) is a selection circuit of the combinatory type which, based on a digital input code, allows to identify any element whatsoever of a two-dimensional matrix 27 of pixels 10 by means of its spatial coordinates (x, y).

The shift registers 55, 56, 57 are chains of memory cells 59 in which a digital datum can be stored and is then propagated from one cell to the other following a timing set by a periodic signal, usually called clock.

In the case shown in fig. 3, associated with the matrix 27 there is a first and a third register 55, 57 each formed by 480 memory cells 59, (one for each row of the matrix of pixels 10), dedicated respectively to row selection and reset; there is also a second register 56 associated with the matrix 27, which has 640 memory cells 59, as many as there are columns in the matrix 27 of the sensor, which allows column selection; and a fourth register 58, formed by 38 cells, which serves to define the input signals of the two decoders 60 and has the function to identify a sub-set of the matrix which has to be selected and whose pixels have to be read. The input signals arising form this fourth register 58 have the function to modify the physical structure of the other registers 55, 56, 57 so as to generate a selected window of interest which corresponds to a selected group of pixels which have to be read, and excluding the pixels which are outside the window. This make easier the management of the data and entails a great increase in the frame rate.

A 38-bit signal is serially introduced into the fourth register 58, through a single connection line 61 with the outside, so as to supply the decoders 60 with the input code necessary to identify, for each of the remaining three shift registers 55, 56, 57, the memory cell 59 with which to start, and the one with which to finish, inserting a so-called signature, that is, a sequence of binary signals which is memorized in the register by means of sequential insertion through external connection lines 62, 63, 64 respectively for the registers of row selection 55, column selection 56 and reset 57.

The inlet point and outlet point of the signature are identified by suitably enabling a switch 65 present in each memory cell 59 of the registers 55, 56, 57. In the input memory cell 59 the switch 65 is closed on the signature input line; in the intermediate memory cells 59, the switch 65 achieves a connection with the previous cell; in the output memory cell 59, the switch 65 is mass connected, interrupting the propagation of the sequence of digital signals.

A pixel 10 of the matrix 27 is read by inserting the digital activation level, for example logical level "1", into the corresponding memory cell 59 of the register 55 of row selection and the register 56 of column selection. The image is scanned by successive rows, that is, by selecting one row and activating in sequence all the columns one after the other. The selection registers 55 and 56 therefore always contain a signature composed of a single occurrence of the activation code ("1" logical).

The reset signal for a pixel 10 is activated by inserting the digital activation level into the corresponding memory cell 59 of the reset register 57. In this case several rows can be reset at the same moment, therefore the signature is composed of a variable number of occurrences of the logical activation level.

In order to regulate the integration time of the incident light on the pixel 10, it is sufficient to vary the structure of the signature in the reset register, since integration lasts from the moment when the reset signal is disabled to the moment when the row to be read is selected. This time will be equal, at least, to the time needed to read all the pixels 10 of one row and, at most, to the time needed to read all the matrix.

The operations of row selection and reset involve simultaneously all the pixels 10 of a row, so that it is possible at the same moment to have all the pixels 10 of the selected row available for reading.

This characteristic allows to obtain a high frequency of image acquisition, which is obtained, as we said, thanks to the insertion of the amplifiers 31.

As can be seen from the block diagram in fig. 2, the data of all the pixels 10 of one row can be simultaneously stored in the 640 amplifiers 31 and then read at high speed simply by connecting, one at a time, the outlet of each amplifier 31 with the global line of data transfer.

Moreover, by using the switches 65 inside the memory cells 59 of the registers 55, 56, 57 as described above, it is possible to vary the length of the chain of memory cells 59 which make up the registers 55, 56, 57, reading a sub-matrix of pixels 10 of arbitrary dimensions, with the advantage of further increasing the speed of acquisition of the images.

Each register 55, 56, 57, 58 has not only the line for inserting the signature, but also an inlet for the timer signal and an outlet for the signature which serves as a control. Moreover, except for the address register 58, there is a reset inlet which zeroes the content of all the memory cells 59 and an inlet for an asynchronous enablement signal, useful for the fine timing of the output signals.

It is clear, however, that modifications and/or additions of parts may be made to the electronic device as described heretofore without departing from the field and scope of the present invention.

It is also clear that, although the present invention has been described with reference to specific examples, a person of skill in the art shall certainly be able to achieve many other equivalent forms of electronic device for silicon electro-optical sensors using CMOS technology, all of which shall come within the field and scope of the present invention.

## Claims

1. Electronic selector device (100) for an electro-optical sensor provided with a plurality of light-sensitive elements, or pixels, (10) arranged in rows and columns so as to form at least a matrix (27), said device comprising a pilot element of said matrix (27) consisting of decoders (60) implemented as four shift registers (55, 56, 57, 58), each of said shift registers (55, 56, 57, 58) comprising memory cells (59), a first (55) and a second (56) of said shift registers being able to identify any one whatsoever of said light-sensitive elements (10) of said matrix (27), the function of a third (57) of said shift registers being to vary the integration time of the light signal, **characterised in that** said fourth register (58) is able to generate input signals in order to selectively enable, in a dynamically programmable way, each of said cells (59) of the other shift registers (55, 56, 57) so as to select and read only a sub-frame of the total of the pixels (10) in the matrix (27).

2. Device as in claim 1, **characterised in that** said input signals are able to be serially introduced into said fourth register (58) in the form of a 38-bit signal.

3. Device as in claim 2, **characterised in that** said input signals introduced into said fourth register (58) are able to supply said decoders (60) with the input code necessary to identify, for each of the remaining three shift registers (55, 56, 57), at least the memory cell (59) with which to start, and at least the one with which to finish.

4. Device as in claim 1 or 2, **characterised in that** the decoder (60) is of the combinatory type and is able to control the positions of the inlets and outlets of said shift registers (55, 56, 57, 58) in order to identify any element whatsoever of said matrix (27) according to its spatial coordinates (x, y) and detect only the output related to a sub-matrix.

5. Device as in any claim hereinbefore, **characterised in that** each of said first (55), second (56) and third (57) shift registers has inlets and outlets in programmable positions, so as to be able to physically change the structure of the register, so as to contain desired and programmable sequences of binary signals, in order to pilot said matrixes (27) of light-sensitive elements (10).

6. Device as in any claim hereinbefore, **characterised in that** each of said first and second shift registers (55, 56) comprises chains of memory cells (59) in which a digital datum is able to be stored which is then propagated from one cell to another according to a timing set by a periodic signal.

7. Device as in claim 6, **characterised in that** each of said memory cells (59) comprises switch means (65) able to selectively enable the connection of the input line for the input cell, to allow the passage of said signal from one of said memory cells (59) to the other through the intermediate cells, and to discharge to earth the input signal in order to interrupt the propagation of the sequence of digital signals for the output cells.

8. Device as in claim 6, **characterised in that** said first shift register (55) and said second shift register (56) comprise a number of memory cells (59) equal to the number of rows of said matrix (27) of pixels (10).

9. Device as in claim 5, **characterised in that** said third register (57) comprises a number of memory cells (59) equal to the number of columns of said matrix (27) of pixels (10).

10. Device as in claim 1, **characterised in that** said fourth register (58) comprises a number of memory cells (59) correlated to the size of the input signal of the decoder (60).

11. Device as in claim 1, **characterised in that** each of said light-sensitive elements (10) is made using the CMOS technology and comprises an inversely polarized diode (11) associated with a regulation, amplification and reading circuit (20).

12. Device as in claim 11, **characterised in that** said regulation, amplification and reading circuit (20) comprises a first transistor (21), a second transistor (22) and a third transistor (23), said first transistor (21) being able to control a light-sensitive node (12) keeping it at a fixed tension when it is switched on and allowing it to charge the capacity associated with said diode (11) when it is switched off, said second transistor (22) being able to achieve the first stage of amplification of the signal present on said light-sensitive node (12), and said third transistor (23) being able to enable the connection between said first transistor (21) and an output line (25) from the light-sensitive element (10).

13. Device as in claim 10, **characterised in that** said transistors (21, 22, 23) are of the MOSFET type.
